# EUROPEAN PATENT SPECIFICATION

(11) **EP 3 532 438 B1**
(45) Date of publication and mention of the grant of the patent: **12.05.2021**
(21) Application number: 17797469.8
(22) Date of filing: 09.10.2017
(51) Int. Cl.: C02F 1/68, C09D 5/00, C02F 101/34, C02F 101/36, C02F 101/38, C02F 103/02, C02F 103/14, C02F 103/28, C02F 103/36, C02F 103/42, C02F 1/50

(54) **USE OF DITHIO-2,2'-BIS(BENZMETHYLAMIDE) FOR DEGRADING 5-CHLORO-2-METHYL-4-ISOTHIAZOLIN-3-ONE**
VERWENDUNG VON DITHIO-2,2'-BIS(BENZMETHYLAMID) ZUM ABBAU VON 5-CHLOR-2-METHYL-4-ISOTHIAZOLIN-3-ON
UTILISATION DE DITHIO-2,2'-BIS(BENZMETHYLAMIDE) POUR LA DÉGRADATION DE 5-CHLORO-2-MÉTHYL-4-ISOTHIAZOLIN-3-ONE

(30) Priority: 31.10.2016 US 201662415275 P
(43) Date of publication of application: 04.09.2019
(73) Proprietor: Nutrition & Biosciences USA 1, LLC, Rochester, NY 14623 (US)
(72) Inventor: FELDER, Patrick T., 8810 Horgen (CH); YVON, Emmanuelle Christine, 8810 Horgen (CH)
(74) Representative: Houghton, Mark Phillip
(86) International application number: PCT/US2017/055686
(87) International publication number: WO 2018/080768

(56) References cited:
- EP-A1- 2 243 516
- EP-A1- 2 865 268
- DE-A1- 19 810 819
- US-A1- 2007 275 094
- US-A1- 2012 247 364
- US-A1- 2016 312 046

## Description

The present invention relates to the use of dithio-2,2'-bis(benzmethylamide) for degrading 5-chloro-2-methyl-4-isothiazolin-3-one from in-can products to minimize user contact.

A variety of antimicrobial compounds is used to control growth of microorganisms in products. In some cases, chlorinated isothiazolin-3-ones are used to provide control of microorganisms in a particular end use environment. However, chlorinated isothiazolone-3-ones can act as sensitizers and are sometimes regarded as undesirable components in products, especially for in-can preservation products, including but not limited to preservation products for paints and coatings and household, industrial, and institutional products. A method for degrading 5-chloro-2-methyl-4-isothiazolin-3-one would be desirable.

Methods are known for degrading isothiazolin-3-ones. For example, U.S. Pat. No. 5,641,411 discloses a method for detoxifying industrial effluents containing isothiazolin-3-ones by contacting the effluents with a water soluble organic thiol compound.

EP 2865268 discloses synergistic microbicidal composition comprising a N-alkyl benzoisothiazolinone and dithio-2,2'-bis(N-methylbenzamide).

US 2016/0312046 discloses a method for producing a coating agent, having a 5-chloro-2-methyl-4-isothiazolone content in the range from 0 to 1 ppm, using components which would introduce in total more than 1.5 ppm of 5-chloro-2-methyl-4-isothiazolone into the coating agent.

EP 2243516 discloses reduction of antimicrobial compound levels during product dispensing.

DE 19810819 relates to a method for treating liquid coating materials containing in-can preservatives. Immediately prior to its application, the coating material is given an in-can preservative that decomposes into secondary products that are harmless for allergy sufferers, or such a reagent is applied in aqueous solution to the already applied dried coating material.

US 2007/0275094 discloses an antimicrobial composition comprising an isothiazolinone, such as 1,2-benzisothiazolin-3-one, and a zinc compound. In use, the zinc from the zinc compound enhances the antimicrobial activity to the isothiazolin-containing composition. This enhancement permits achieving the desired antimicrobial activity at a lower usage rate than is achieved using the isothiazolinone in the absence of the zinc compound.

US 2012/0247364 discloses an antimicrobial composition comprising an isothiazolin-3-one, such as 1,2-benzisothiazolin-3-one, a zinc compound, and a surfactant, to prevent the growth of microorganisms in mineral slurries such as aqueous calcium carbonate slurries.

However, there is a need for a sustainable and more environmentally friendly method for treating products in situ to reduce levels of isothiazolin-3-ones without introducing other objectionable compounds into the product. The problem addressed by this invention is to provide such a method for in situ reduction of antimicrobial compounds.

### STATEMENT OF THE INVENTION

The invention provides the use of dithio-2,2'-bis(benzmethylamide) for degrading 5-chloro-2-methyl-4-isothiazolin-3-one comprising contacting 5-chloro-2-methyl-4-isothiazolin-3-one with dithio-2,2'-bis(benzmethylamide) wherein after the 5-chloro-2-methyl-4-isothiazolin-3-one is contacted with dithio-2,2'-bis(benzmethylamide), 5-chloro-2-methyl-4-isothiazolin-3-one is present in an amount from 0 to 1 ppm.

### DETAILED DESCRIPTION OF THE INVENTION

Unless otherwise specified, temperatures are in degrees centigrade (°C), references to percentages are by weight (wt. %) and references to "ppm" are in parts per million by weight (weight/weight) of active ingredient (antimicrobial compound). Weights and functionality of resin are on a dry basis, unless otherwise specified. All numerical range endpoints are inclusive and combinable. "CMIT" is 5-chloro-2-methyl-4-isothiazolin-3-one (CAS: 2617-55-4) or a blend of (5-chloro-2-methyl-4-isothiazolin-3-one ("CMI") with "MI" (2-Methyl-1,2-thiazol-3(2*H*)-one) (CAS: 2617-55-4/2682-20-4)). "DTBMA" is dithio-2,2'-bis(benzmethylamide) (CAS: 2527-58-4). A liquid composition is one which comprises a continuous liquid phase at 25°C. The liquid phase may be aqueous, an oil-in-water emulsion, or oil-based, preferably aqueous. The composition may also contain insoluble solids, which may be dispersed, suspended or emulsified.

As used herein, "degrading 5-chloro-2-methyl-4-isothiazolone" means that the 5-chloro-2-methyl-4-isothiazolone within a period of up to 1 month, alternatively over a period of 2 weeks, further alternatively over a period of 1 week, further alternatively within 24 hours, further alternatively within 12 hours, further alternatively within 6 hours, further alternatively within 2 hours, further alternatively within 1 hour is irreversibly decomposed or degraded, so that after this period, the content of 5-chloro-2-methyl-4-isothiazolone, based on the product is in the range from 0 to 1.0 ppm, alternatively 0 to 0.5 ppm, further alternatively in the range of 0 to 0.1 ppm.

As used herein, the following terms have the designated definitions, unless the context clearly indicates otherwise. The term "antimicrobial compound" or "biocide" refers to a compound capable of inhibiting the growth of or controlling the growth of microorganisms at a locus; antimicrobial compounds include bactericides, bacteristats, fungicides, fungistats, algaecides and algistats, depending on the dose level applied, system conditions and the level of microbial control desired. The term "microorganism" includes, for example, fungi (such as yeast and mold), bacteria and algae.

In the present invention the use of DTBMA for degrading CMIT comprises contacting CMIT with DTBMA wherein after the CMIT is contacted with DTBMA, CMIT is present in an amount from 0 to 1.0 ppm. The CMIT is contacted with DTBMA by conventional means known by those of ordinary skill in the art. The CMIT and the DTBMA may be added to a liquid composition. The two compounds may be added sequentially or simultaneously.

Preferably, prior to degrading CMIT, the liquid composition contains from 1 ppm to 100 ppm total of CMIT, preferably at least 5 ppm, preferably at least 10 ppm, preferably at least 15 ppm, preferably no more than 75 ppm, preferably no more than 60 ppm, preferably no more than 50 ppm, preferably no more than 40 ppm, preferably no more than 30 ppm. Preferably, prior to degrading CMIT, the liquid composition contains from 1 ppm to 500 ppm total of DTBMA, preferably at least 25 ppm, preferably at least 75 ppm, preferably at least 100 ppm, preferably no more than 400 ppm, preferably no more than 300 ppm, preferably no more than 250 ppm, preferably no more than 200 ppm, preferably no more than 150 ppm. Prior to degrading CMIT with DTBMA, CMIT may be present alone (as CMIT alone or as a blend with MIT) combination with other known biocides. Preferably the CMIT is present alone. Additionally, the liquid composition may comprise additional known biocides. Preferably no other biocides are present in the liquid composition.

The liquid composition in the present invention may include, for example: cooling tower water; mineral slurries; wastewater; ballast water; pulp and paper processing fluids; emulsions; dispersions; paints; latices; construction adhesives, such as ceramic adhesives, carpet backing adhesives, and laminating adhesives; industrial or consumer adhesives; photographic chemicals; printing fluids; household products, such as bathroom and kitchen cleaners; personal care products such as cosmetics, toiletries, shampoos, and liquid soaps and detergents; industrial cleaners; floor polishes; laundry rinse water; metalworking fluids; conveyor lubricants; hydraulic fluids; petroleum processing fluids; fuel; oilfield fluids, such as injection water, fracture fluids, and drilling muds; and water from pools and spas. Preferably, the invention is used to reduce CMIT levels in paints and coatings and personal care products, i.e., those intended to be applied directly to human or animal skin. In personal care compositions, other ingredients may include, e.g., UV radiation-absorbing agents, surfactants, rheology modifiers or thickeners, fragrances, moisturizers, humectants, emollients, conditioning agents, emulsifiers, antistatic aids, pigments, dyes, tints, colorants, antioxidants, reducing agents and oxidizing agents.

Preferably, the pH of the liquid composition, measured at 25°C, is from 3.0 to 10, preferably from 4.0 to 9.0, preferably from 5.0 to 9.0, preferably from 7 to 9. Preferably, the liquid composition prior to degrading CMIT has a temperature from 10°C to 60°C, preferably from 15°C to 40°C, preferably from 18°C to 30°C.

### EXAMPLES

### Treatment of aqueous liquid compositions

The aqueous liquid compositions tests were aqueous paints or aqueous, pH-adjusted solutions with or without buffer. The former contained normally typical levels of in-can preservatives (30-200 ppm) ensuring their integrity, i.e. avoided quick degradation by microbial infestation of the biocidal actives to be added later. The aqueous liquid compositions "as are" (without additional biocidal actives) acted as *control* in the UHPLC analyses described below.

CMIT/MIT(3:1) and DTBMA or MBIT - with and without co-biocides (additionally to the ones already present in the pre-treated aqueous liquid compositions) - were added to the aqueous liquid compositions such that each biocidal active reached a specified concentration, typically between 20-200ppm, depending on active. The biocidal products used were:

| | |
|---|---|
| - KATHON™ LXE | 1.6% CMI/MI (3:1), liquid |
| - ROCIMA™ 556 or DENSIL P: | 10 % DTBMA or 25 % DTBMA aq. dispersion, respectively |
| - ROCIMA™ 518 | 7.5 % BIT, 3.6 % DTBMA, aqueous dispersion |
| - Experimental product MB25 | 25 % MBIT, liquid |
| - ROCIMA™ GT | 1.05 % CIT/MIT, 3.75 % DDAC, 7.4% EDDM |

"BIT" is 1,2-benzisothiazol-3(2*H*)-one - CAS 2634-33-5.

"MBIT" is 2-methyl-1,2-benzisothiazol-3(2H)-one - CAS 2527-66-4.

"DDAC" is Didecyldimethylammonium chloride

"EDDM" is (Ethylenedioxy)dimethanol

ROCIMA™ and KATHON™ products are commercially available from The Dow Chemical Company, Midland, MI.

### HPLC Method

The analytical method applied was based on reversed-phase UHPLC using biocidal standards, a C18 column (Zorbax eclipse, 2.1^{∗}100mm-1.8 micron with pre-column Zorbax eclipse, 2.1^{∗}5mm-1.8 micron) and UV DAD detection.

The *biocidal standards* were prepared from 1000ppm AI Standard Stock Solutions comprising methanol-water (50:50) or DMSO as solvent matrix by dilution in methanol-water (50:50) to 100ppm or 20ppm (ZPT), respectively. 1 ml of these *biocide standard solutions* were transferred and filtered through a 0.2µm filter into an autosampler vial.

The *test solutions* were prepared by weighing 1g of the biocidal test samples into a 50ml vial, adding 9ml of MeOH/ H2O 50:50, followed by sonication for 30 minutes. After addition of 0.1ml of acetic acid the mixture was centrifuged at 4000rpm for 4 minutes. 1 ml of these *test solutions* were transferred and filtered through a 0.2µm filter into an autosampler vial.

### HPLC Chromatographic Parameters:

| | | | | |
|---|---|---|---|---|
| Column temperature: | | 45 °C | | |
| Flow rate: | | 0.8 ml/minute | | |
| Solvents: | Reservoir A : | H3PO4, 0.01% in water | | |
| | Reservoir B : | Acetonitrile | | |
| Mobile Phase Gradient: | | Minutes | A | B |
| | | 0 | 100% | 0% |
| | | 2 | 100% | 0% |
| | | 10 | 50% | 50% |
| | | 11 | 0% | 100% |
| | | 14 | 0% | 100% |
| | | 15 | 100% | 0% |
| | | 18 | 100% | 0% |
| End time: | | 18 minutes | | |
| Injection Volume: | | 5 µl | | |
| Wave lengths: | | 280 nm for MIT, CMIT | | |
| | | 315 nm for BIT, n-MBIT, | | |
| Retention times | | all analyzed biocidal actives between 1 and 14 minutes | | |

### Timing

For time zero, the analytical solutions were prepared within 1-2 hours after treating the aqueous liquid compositions with biocidal actives such as CMI/MI and/or DTBMA.

Analysis of the prepared solutions was completed within the shortest possible time.

The preparations and analysis of the standard and test solutions were executed at defined time intervals between 1 hour and 1 month.

### Analysis

The biocide concentrations in the test samples were calculated from peak areas of standard and test sample, taking into account the concentration of standard, the sample weight and the dilution factor (10x).

Paint A, **pH 9:** CMI degradation in presence of DTBMA, using ROCIMA 518 product (DTBMA/BIT)

| **Example #** | **Sample** | **Addition** | **pH** | **Time of measurement** | **Results in ppm** | |
|---|---|---|---|---|---|---|
| | | | | | **CMIT** | **MIT** |
| | A | none (control) | **pH 9** | n/a | 0.8 | 0.7 |
| 1 | A | 0.14% ROCIMA GT | | time zero, calculated | 12.4 | 4.6 |
| | | | | 1 week | 10.9 | 4.6 |
| 2 | A | 0.3% ROCIMA GT | | time zero, calculated | 25.6 | 9.0 |
| | | | | 1 week | 20.6 | 8.6 |
| 3 | A | 0.3% ROCIMA 518 (DTBMA/BIT) 0.14% ROCIMA GT | | time zero, calculated | 12.4 | 4.6 |
| | | | | 1 week | 0 | 4 |
| 4 | A | 0.3% ROCIMA 518 (DTBMA/BIT) 0.3% ROCIMA GT | | time zero, calculated | 25.6 | 9.0 |
| | | | | 1 week | 0 | 11 |

Paint B, **pH 8.2:** CMI degradation in presence of DTBMA, using ROCIMA 556 product (DTBMA)

| **Example #** | **Sample** | **Addition** | **pH** | **Time of measurement** | **Results in ppm** | |
|---|---|---|---|---|---|---|
| | | | | | **CMIT** | **MIT** |
| | B | none (control) | **pH 8.2** | start | 0 | 31 |
| | | | | 1h | 0 | 31 |
| | | | | 3d | 0 | 31 |
| | | | | 1 week | 0 | 31 |
| 5 | B | KATHON LXE, 0.31% | | time zero, calculated | 37 | 44 |
| | | | | 0.5h | 46 | 46 |
| | | | | 1h | 46 | 46 |
| | | | | 3d | 44 | 46 |
| | | | | 1 week | 39 | 46 |
| 6 | B | KATHON LXE, 0.31% ROCIMA 556 (DTBMA), 0.1% | | time zero, calculated | 37 | 44 |
| | | | | 0.5h | 0 | 43 |
| | | | | 1h | 0 | 44 |
| | | | | 3d | 0 | 44 |
| | | | | 1 week | 0 | 43 |
| Comp 1 | B | KATHON LXE, 0.31% Exp. Prod. MB25 (MBIT), 0.04% | | time zero, calculated | 37 | 44 |
| | | | | 0.5h | 40 | 44 |
| | | | | 1h | 41 | 45 |
| | | | | 3d | 41 | 45 |
| | | | | 1 week | 36 | 45 |

Paint C, **pH 7.2** : CMI degradation in presence of DTBMA using Densil P (DTBMA)

| **Example #** | **Sample** | **Addition** | **pH** | **Time of measurement** | **Results in ppm** | |
|---|---|---|---|---|---|---|
| | | | | | **CMIT** | **MIT** |
| | C | none (control) | pH 7.2 | n/a | 3 | 2 |
| 7 | C | KATHON LXE, 0.2% | | time zero, calculated | 27 | 10 |
| | | | | 0.5h | 22 | 10 |
| | | | | 1h | 22 | 10 |
| | | | | 2h | 23 | 10 |
| | | | | 1 week | 23 | 11 |
| 8 | C | KATHON LXE, 0.2% Densil P (DTBMA), 0.04% | | time zero, calculated | 27 | 10 |
| | | | | 0.5h | 6 | 10 |
| | | | | 1h | 0 | 10 |
| | | | | 2h | 0 | 10 |
| | | | | 1 week | 0 | 11 |
| Comp 2 | C | KATHON LXE, 0.2% Exp.Prod.MB25 (MBIT), 0.02% | | time zero, calculated | 27 | 10 |
| | | | | 0.5h | 25 | 11 |
| | | | | 1h | 24 | 11 |
| | | | | 2h | 25 | 11 |
| | | | | 1 week | 24 | 11 |

Water, **pH 7** : CMI degradation in presence of DTBMA, using ROCIMA 518 product (DTBMA/BIT)

| **Example #** | **Sample** | **Addition** | **pH** | **Time of measurement** | **Results in ppm** | |
|---|---|---|---|---|---|---|
| | | | | | **CMIT** | **MIT** |
| | D | none (control) | **pH 7** | time zero, calculated | 27 | 9 |
| 9 | D | ROCIMA GT, 0.33% ROCIMA 518 (DTBMA/BIT), 0.44% | | 0.5h | 23 | n.d. |
| | | | | 1.5h | 20 | n.d. |
| | | | | 18h | 15 | n.d. |

Water/Polyglycol (80:20), **pH 7:** CMI degradation in presence of DTBMA, using ROCIMA 556 product (DTBMA)

| **Example #** | **Sample** | **Addition** | **pH** | **Time of measurement** | **Results in ppm** | |
|---|---|---|---|---|---|---|
| | | | | | **CMIT** | **MIT** |
| | E | none (control) | **pH 7** | n/a | n.d. | n.d. |
| 10 | E | KATHON LXE, 0.31% | | time zero, calculated | 37 | 12 |
| | | | | 0.5h | 42 | 13 |
| | | | | 1h | 42 | 13 |
| | | | | 3d | 43 | 13 |
| | | | | 1 week | 40 | 13 |
| 11 | E | KATHON LXE, 0.31% ROCIMA 556 (DTBMA), 0.1% | | time zero, calculated | 37 | 12 |
| | | | | 0.5h | 30 | 12 |
| | | | | 1h | 20 | 12 |
| | | | | 3d | 0 | 11 |
| | | | | 1 week | 0 | 11 |
| Comp 3 | E | KATHON LXE, 0.31% Exp. Prod. MB25 (MBIT), 0.04% | | time zero, calculated | 37 | 12 |
| | | | | 0.5h | 42 | 13 |
| | | | | 1h | 42 | 13 |
| | | | | 3d | 43 | 13 |
| | | | | 1 week | 40 | 13 |

Water/Polyglycol (80:20), **pH 4:** CMI degradation in presence of DTBMA, using ROCIMA 556 product (DTBMA)

| **Example #** | **Sample** | **Addition** | **pH** | **Time of measurement** | **Results in ppm** | |
|---|---|---|---|---|---|---|
| | | | | | **CMIT** | **MIT** |
| | F | none (control) | **pH 4** | n/a | n.d. | n.d. |
| 12 | F | KATHON LXE, 0.31% | | time zero, calculated | 37 | 12 |
| | | | | 0.5h | 42 | 13 |
| | | | | 1h | 42 | 13 |
| | | | | 3d | 43 | 13 |
| | | | | 1 week | 40 | 13 |
| 13 | F | KATHON LXE, 0.31% ROCIMA 556 (DTBMA), 0.1% | | time zero, calculated | 37 | 12 |
| | | | | 0.5h | 38 | 13 |
| | | | | 1h | 31 | 13 |
| | | | | 3d | 0 | 13 |
| | | | | 1 week | 0 | 13 |
| Comp 4 | F | KATHON LXE, 0.31% Exp. Prod. MB25 (MBIT), 0.04% | | time zero, calculated | 37 | 12 |
| | | | | 0.5h | 43 | 13 |
| | | | | 1h | 43 | 13 |
| | | | | 3d | 43 | 13 |
| | | | | 1 week | 40 | 13 |

| | | | | | | |
|---|---|---|---|---|---|---|
| n. d.: not determined | | | | | | |

## Claims

1. Use of dithio-2,2'-bis(benzmethylamide) for degrading 5-chloro-2-methyl-4-isothiazolin-3-one comprising contacting 5-chloro-2-methyl-4-isothiazolin-3-one with dithio-2,2'-bis(benzmethylamide) wherein after the 5-chloro-2-methyl-4-isothiazolin-3-one is contacted with dithio-2,2'-bis(benzmethylamide), 5-chloro-2-methyl-4-isothiazolin-3-one is present in an amount from 0 to 1.0 ppm.

2. The use of claim 1 wherein after the 5-chloro-2-methyl-4-isothiazolin-3-one is contacted with dithio-2,2'-bis(benzmethylamide), 5-chloro-2-methyl-4-isothiazolin-3-one is present from 0 to 0.1 ppm.

3. The use of claim 1 wherein 5-chloro-2-methyl-4-isothiazolin-3-one and dithio-2,2'-bis(benzmethylamide) are contacted in a liquid composition.

4. The use of claim 3 wherein the liquid composition is aqueous.

5. The use of claim 4 in which the liquid composition is cooling tower water; mineral slurries; wastewater; ballast water; pulp and paper processing fluids; emulsions; dispersions; paints; latices; construction adhesives, such as ceramic adhesives, carpet backing adhesives, and laminating adhesives; industrial or consumer adhesives; photographic chemicals; printing fluids; household products, such as bathroom and kitchen cleaners; personal care products such as cosmetics, toiletries, shampoos, and liquid soaps and detergents; industrial cleaners; floor polishes; laundry rinse water; metalworking fluids; conveyor lubricants; hydraulic fluids; petroleum processing fluids; fuel; oilfield fluids, such as injection water, fracture fluids, and drilling muds; and water from pools and spas.

6. The use of claim 4 wherein the pH of the liquid composition is from 3.0 to 10.

7. The use of claim 1 wherein the 5-chloro-2-methyl-4-isothiazolin-3-one is presented in a blend with 2-methyl-1,2-thiazol-3(2*H*)-one).

## Patentansprüche

1. Verwendung von Dithio-2,2'-bis(benzmethylamid) zum Abbau von 5-Chlor-2-methyl-4-isothiazolin-3-on, umfassend Kontaktieren von 5-Chlor-2-methyl-4-isothiazolin-3-on mit Dithio-2,2'-bis(benzmethylamid), wobei nach dem Kontaktieren des 5-Chlor-2-methyl-4-isothiazolin-3-ons mit Dithio-2,2'-bis(benzmethylamid) 5-Chlor-2-methyl-4-isothiazolin-3-on in einer Menge von 0 bis 1,0 ppm vorliegt.

2. Verwendung nach Anspruch 1, wobei nach dem Kontaktieren des 5-Chlor-2-methyl-4-isothiazolin-3-ons mit Dithio-2,2'-bis(benzmethylamid) 5-Chlor-2-methyl-4-isothiazolin-3-on in einer Menge von 0 bis 0,1 ppm vorliegt.

3. Verwendung nach Anspruch 1, wobei 5-Chlor-2-methyl-4-isothiazolin-3-on und Dithio-2,2'-bis(benzmethylamid) in einer flüssigen Zusammensetzung kontaktiert werden.

4. Verwendung nach Anspruch 3, wobei die flüssige Zusammensetzung wässrig ist.

5. Verwendung von Anspruch 4, in welcher die flüssige Zusammensetzung Kühlturmwasser; mineralische Aufschlämmungen; Abwasser; Ballastwasser; Fluids der Zellstoff- und Papier-Verarbeitung; Emulsionen; Dispersionen; Farben; Latices; Konstruktionsklebstoffe, wie beispielsweise Keramikklebstoffe, Klebstoffe für Teppichrückseiten und Klebstoffe zum Laminieren; Industrie- oder Konsumentenklebstoffe; fotografische Chemikalien; Fluids zum Drucken; Haushaltsprodukte, wie beispielsweise Badezimmer und Küchenreiniger; Körperpflegemittel, wie beispielsweise Kosmetika. Toilettenartikel, Shampoos und flüssige Seifen und Reinigungsmittel; industrielle Reinigungsmittel; Fußbodenpflegemittel; Wäschespülmittel; Fluids für die Metallbearbeitung; Schmiermittel für Fördereinrichtungen; hydraulische Fluids; Fluids für die Erdölverarbeitung; Kraftstoff; Ölfeldfluid, wie beispielsweise Injektionswasser, Sprengfluids für Ölfelder und Bohrspülschlamm; und Wasser aus Pools und Spas sind.

6. Verwendung nach Anspruch 4, wobei der pH-Wert der flüssigen Zusammensetzung 3,0 bis 10 beträgt.

7. Verwendung nach Anspruch 1, wobei das 5-Chlor-2-methyl-4-isothiazolin-3-on in einem Blend mit 2-Methyl-1,2-thiazol-3(2*H*)-on dargestellt wird.

## Revendications

1. Utilisation de dithio-2,2'-bis(benzméthylamide) pour dégrader du 5-chloro-2-méthyl-4-isothiazolin-3-one, comprenant la mise en contact du 5-chloro-2-méthyl-4-isothiazolin-3-one avec du dithio-2,2'-bis(benzméthylamide), dans laquelle, après la mise en contact du 5-chloro-2-méthyl-4-isothiazolin-3-one avec du dithio-2,2'-bis(benzméthylamide), du 5-chloro-2-méthyl-4-isothiazolin-3-one est présent en une quantité qui est comprise entre 0 et 1,0 ppm.

2. Utilisation selon la revendication 1, dans laquelle, après la mise en contact du 5-chloro-2-méthyl-4-isothiazolin-3-one avec du dithio-2,2'-bis(benzméthylamide), du 5-chloro-2-méthyl-4-isothiazolin-3-one est présent en une quantité qui est comprise entre 0 et 0,1 ppm.

3. Utilisation selon la revendication 1, dans laquelle du 5-chloro-2-méthyl-4-isothiazolin-3-one et du dithio-2,2'-bis(benzméthylamide) sont mis en contact dans une composition liquide.

4. Utilisation selon la revendication 3, dans laquelle la composition liquide est aqueuse.

5. Utilisation selon la revendication 4, dans laquelle la composition liquide est de l'eau de tour de refroidissement ; des boues minérales ; des eaux usées ; des eaux de ballast ; des fluides de traitement de la pâte à papier et du papier ; des émulsions ; des dispersions ; des peintures ; des micelles ; des adhésifs de structure tels que des adhésifs céramique, des adhésifs de support de tapis ou de moquette et des adhésifs de pelliculage ; des adhésifs industriels ou grand public ; des produits chimiques photographiques ; des fluides d'impression ; des produits à usage domestique tels que des nettoyants de salle de bain et de cuisine ; des produits d'hygiène personnelle tels que des cosmétiques, des produits de toilette, des shampooings ainsi que des savons liquides et des détergents ; des nettoyants industriels ; des produits d'entretien des sols ; des eaux de rinçage du linge ; des fluides de travail des métaux ; des lubrifiants pour convoyeurs ; des fluides hydrauliques ; des fluides de traitement du pétrole ; des carburants ; des fluides de gisement pétrolifère tels que de l'eau d'injection, des fluides de fracturation et des boues de forage ; et de l'eau de piscines et de spas.

6. Utilisation selon la revendication 4, dans laquelle le pH de la composition liquide est compris entre 3,0 et 10.

7. Utilisation selon la revendication 1, dans laquelle le 5-chloro-2-méthyl-4-isothiazolin-3-one est présenté dans un mélange avec du 2-méthyl-1,2-thiazol-3(2*H*)-one).
